# EUROPEAN PATENT SPECIFICATION

(11) **EP 2 692 763 B1**
(45) Date of publication and mention of the grant of the patent: **25.03.2020**
(21) Application number: 12763836.9
(22) Date of filing: 28.03.2012
(51) Int. Cl.: C08G 63/08, C08L 67/04, C09D 167/04, C08G 63/60, C08G 63/66

(54) **POLYESTER RESIN RESULTING FROM THE COPOLYMERISATION OF LACTIC ACID AND ISOSORBIDE, AND A PRODUCTION METHOD THEREFOR**
AUS DER GEMEINSAMEN POLYMERISIERUNG VON MILCHSÄURE UND ISOSORBID GEWONNENES POLYESTERHARZ UND HERSTELLUNGSVERFAHREN DAFÜR
RÉSINE POLYESTER RÉSULTANT DE LA COPOLYMÉRISATION DE L'ACIDE LACTIQUE ET DE L'ISOSORBIDE, ET PROCÉDÉ DE PRODUCTION DE CELLE-CI

(30) Priority: 29.03.2011 KR 20110028366
(43) Date of publication of application: 05.02.2014
(73) Proprietor: SK Chemicals Co., Ltd., Seongnam-Si, Gyeonggi-Do 463-400 (KR)
(72) Inventor: KIM, Dong-Jin, Seoul 153-766 (KR); KIM, Jong-Ryang, Suwon-si Gyeonggi-do 441-460 (KR)
(74) Representative: Ter Meer Steinmeister & Partner
(86) International application number: PCT/KR2012/002240
(87) International publication number: WO 2012/134152

(56) References cited:
- WO-A1-2006/010061
- WO-A1-2006/010061
- WO-A1-2008/056136
- WO-A2-2011/031112
- WO-A2-2011/083969
- JP-A- 2009 242 443
- JP-A- 2010 037 463

## Description

### FIELD OF THE INVENTION

This invention relates to the use of an article for molding, the article comprising a polyester resin, the polyester resin having a superior heat-resistance and color as well as high content of a compound derived from biomass due to copolymerization of lactic acid or a compound derived therefrom and isosorbide.

### BACKGROUNDS OF THE INVENTION

Generally used resins such as polyester, polycarbonate, polystyrene, polyethylene, polypropylene, styrene-acryl copolymer are obtained from fossil resources such as petroleum. Recently, efforts are being made to reduce the usage of fossil resources in order to counter the depletion of fossil resources, increasing levels of carbon dioxide in the atmosphere by mass consumption of petroleum resources, and following global warming. For example, when resins derived from plants which grow up with emitting carbon dioxide into the atmosphere are used, carbon dioxide circulates through the environment, which is good for relieving global warming, the depletion of petroleum resources, and so on.

For the environmental circulating resin(polymer), it is desirable that biomass resource content(total amount of organisms) is increased. Biomass means biological organisms such as plants, microorganisms, fungus bodies, animal bodies which gain solar energy. Biomass resources include not only the environmental circulating resources derived from plants such as starchy resources like grains or potatoes, cellulosic resources like herbs, forest trees, rice straw or rice husks, or saccharic resources like sugar cane or sugar beet, and the environmental circulating resources derived from animals such as muck and carcass of livestock, microorganisms fungus bodies, but also various organic wastes such as paper and food garbage derived from these resources. Biomass resources are environmentally friendly because they are renewable and inexhaustible unlike fossil resources, and carbon dioxide released into the atmosphere by combustion is also circulated in nature. Such biomass resources can be used as energy sources and ingredients of various synthetic materials and replace conventional petrochemicals by a combination with biological or chemical technology.

The polyester resin has been widely used in the fields of the packing materials, forming products and films, and is one of the environment-friendly plastics which has no endocrine disruptors. Recently, concerning the polycarbonate which has been mainly used as the heat-resisting container for food, harmfulness of bisphenol-A to the human being has been revealed. And, the demand for the environment-friendly transparent and heat-resisting polyester resin has more increased. In the case of homopolyester polymerized with only terephthalic acid and ethylene glycol, physical properties and heat-resistance thereof can be somewhat enhanced through a stretching-induced crystallization and heat-setting. However, there are limitations on application and enhancement of heat-resistance. Therefore, a polyester resin copolymerized with two or more glycol or dicarboxylic acid components has been commercially used widely to improve formability thereof and to remove crystallinity thereof. However, in the case of such copolymerized polyester, it is difficult to enhance heat-resistance thereof by stretching or crystallize process.

Therefore, recently, a method to enhance heat-resistance of the polyester resin has been developed using isosorbide, which is a biomass compound derived from starch and represented by following Formula 1, as a co-monomer of the polyester resin.

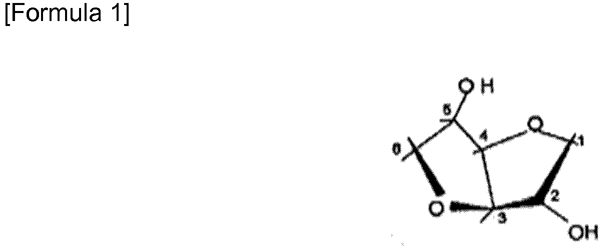

It is known that isosorbide has low reactivity as a secondary alcohol so that it is difficult to prepare high viscous polyester which can be used for manufacturing sheets or bottles. However, U.S. patent No. 5,959,066 discloses a method for preparing polyester having intrinsic viscosity of more than or equal to 0.35dl/g by melt polymerization using terephthalic acid and various diols including isosorbide. The polyester resin having intrinsic viscosity of more than or equal to 0.35dl/g is used for optical products and coating, and the polyester resin having intrinsic viscosity of more than or equal to 0.4dl/g is used for CD, and the polyester resin having intrinsic viscosity of more than or equal to 0.5dl/g can be used for bottles, films, sheets and injection molding. Moreover, U.S. patent No. 6,063,464 discloses a method for preparing the polyester having intrinsic viscosity of more than or equal to 0.15dl/g by melt polymerization using the glycol components including isosorbide. In the above stated patents, even though the polyester is prepared by conventional raw materials, methods and catalysts for polyester polymerization using isosorbide, the total amount of the compound derived from biomass is kept low.

WO 2011/083969 A2 discloses a toner for use in an electronic photograph-duplicating process or in an electrostatic printing process, and a polyester resin included in the toner as a binder, wherein the polyester resin comprises lactic acids or lactides which are derivative compounds thereof, and dianhydrohexitols which are bio-derived sugar derivatives.

WO 2011/031112 A2 discloses a polyester resin copolymerized with isosorbide and 1,4-cyclohexane dimethanol, wherein the copolymerized polyester resin has an alternating structure of acid moieties which are derived from acid components and diol moieties which are derived from diol components.

WO 2006/010061 A1 provides aromatic copolyetheresters that include hydroxyalkanoic acid residues and which are produced from a mixture of aromatic dicarboxylic acids, hydroxyalkanoic acids, a poly(alkylene ether) glycol, and a glycol component.

### SUMMARY OF THE INVENTION

Therefore, it is an object of the present invention to provide an environment-friendly polyester resin with high biomass content using isosorbide and lactic acid which are the environmental circulating polymerization resources derived from plants or compounds derived from the lactic acid, and a method for preparing the same.

It is another object of the present invention to provide a polyester resin having superior heat-resistance and color, and a method for preparing the same.

In order to achieve these objects, the present invention provides the use of an article for molding as defined in claims 1 to 4.

The polyester resin for use according to the present invention is environment friendly and has superior heat-resistance and color because it is prepared by using both isosorbide and lactic acid or a compound derived therefrom which are compounds derived from biomass.

### DETAILED DESCRIPTION OF THE INVENTION

A more complete appreciation of the invention, and many of the attendant advantages thereof, will be better appreciated by reference to the following detailed description.

The polyester resin for use according to the present invention is prepared by copolymerization of diacid components, diol components and lactic acid or a compound derived therefrom, and has the repeated structure of diacid moiety derived from the diacid components, diol moiety derived from the diol components and hydroxy-monoacid moiety derived from the lactic acid or the compound derived therefrom.

The diacid components which are used for producing the copolymerized polyester resin for use according to the present invention include (i) terephthalic acid as a major component, and if necessary, (ii) dicarboxylic acid components selected from the group consisting of aromatic dicarboxylic acid components of 8 to 14 carbon numbers and aliphatic dicarboxylic acid components of 4 to 12 carbon numbers, as copolymerization monomers for improving the properties of the produced polyester resin. The aromatic dicarboxylic acid components of 8 to 14 carbon numbers include various aromatic dicarboxylic acid components which are conventionally used for producing polyester resin, and examples thereof include isophthalic acid, naphthalene dicarboxylic acid such as 2,6-naphthalene dicarboxylic acid, diphenyl dicarboxylic acid, and so on, except terephthalic acid. The aliphatic dicarboxylic acid components of 4 to 12 carbon numbers include various linear, branched or cyclic aliphatic dicarboxylic acid components which are conventionally used for producing polyester resin, and examples thereof include cyclohexane dicarboxylic acid such as 1,4-cyclohexane dicarboxylic acid and 1,3-cyclohexane dicarboxylic acid, phthalic acid, sebasic acid, succinic acid, isodecylsuccinic acid, maleic acid, fumaric acid, adipic acid, glutaric acid, azelaic acid, and so on. In the present invention, the dicarboxylic acid components can be used alone or in a mixed form thereof. The amount of the dicarboxylic acid components is 80 to 100 mol%, preferably 90 to 100 mol%, and more preferably 95 to 100 mol% with respect to the total diacid components, and remaining components in the total diacid components are the aromatic or aliphatic dicarboxylic acid components except terephthalic acid. Wherein, if the amount of the terephthalic acid components is too small, the produced polyester resin may not have sufficient heat-resistance and not be applied for molding usage.

In this specification, the term "terephthalic acid or terephthalic acid component" means terephthalic acid, alkyl ester thereof(lower alkyl(1 to 4 carbon numbers) ester such as monomethyl, monoethyl, dimethyl, diethyl, dibutyl ester and so on), and/or acid ester forming derivatives such as anhydride thereof, which produce terephthaloyl moiety when reacted with glycol component. Also, in this specification, the diacid moiety, the diol moiety and the hydroxy-monoacid moiety represent residues which remain after hydrogens, hydroxyl groups, or alkoxy groups are removed in the polymerization reaction of the acid components, the diol components and the lactic acid or the compound derived therefrom.

The diol components used in the present invention include (i) 10 to 40 mol%, preferably 10 to 30 mol% of isosorbide(dianhydrohexitol), (ii) 50 to 80 mol%, and preferably 70 to 80 mol% of ethylene glycol, and if necessary, (iii) 0 to 20 mol%, and preferably 1 to 10 mol% of glycols selected from the group consisting of diethylene glycol, triethylene glycol, propanediol(1,2-propanediol, 1,3-propanediol and so on), 1,4-butanediol, pentanediol, hexanediol(1,6-hexanediol and so on), neopentyl glycol(2,2-dimethyl-1,3-propanediol), 1,2-cyclohexanediol, 1,4-cyclohexanediol, 1,2-cyclohexanedimethanol, 1,3-cyclohexanedimethanol, 1,4-cyclohexanedimethanol, tetramethylcyclobutanediol, and mixtures thereof as copolymerization monomers for improving the properties of the produced polyester resin, with respect to the total diol components.

The lactic acid or the compound derived therefrom used in the present invention is a compound having properties of both acid and alcohol, and include D-lactic acid, L-lactic acid, D-lactide or L-lactide generated from lactic acid. The amount of the lactic acid or the compound derived therefrom is 1 to 50 weight%, preferably 10 to 40 weight%, and more preferably 20 to 30 weight% with respect to the total resin polymerization reactants. The more the lactic acid or the compound derived therefrom is used, the better unless heat-resistance and color of the produced polyester resin is affected. However, if the amount is too large, the heat-resistance of the polyester resin may be deteriorated. In the polyester resin for use according to the present invention, the amount of biomass resource components including the isosorbide and the lactic acid or the compound derived therefrom is preferably 5 to 70 weight%, more preferably 20 to 60 weight%, and most preferably 30 to 50 weight%, and the amount of compounds derived from petroleum resources including the diacid components and the diol components is 30 to 95 weight%, and preferably 40 to 80 weight% with respect to the total polyester resin polymerization reactants. When the amount of the biomass resource components is less than 5 weight%, the usage of the biomass resource components is meaningless, and when the amount of the biomass resource components is more than 70 weight%, the heat-resistance and color of the produced polyester resin may be deteriorated.

Hereinafter, the method for preparing polyester resin for use of the present invention will be described. First, (a) polymerization reactants including (i) the diacid components which include terephthalic acid and if necessary, the aromatic or aliphatic dicarboxylic acid components, (ii) the diol components which include 10 to 40 mol% of isosorbide, 50 to 80 mol% of ethylene glycol and if necessary, other glycol components, and (iii) 1 to 50 weight% of the lactic acid or the compound derived therefrom with respect to the total resin polymerization reactants, are subject to an esterification reaction or a trans-esterification reaction at the increased pressure of 0.1 to 3.0 kg/cm² and the temperature of 200 to 300°C during an average retention time of 100 minutes to 10 hours. Next, (b) the product of the esterification reaction or the trans-esterification reaction is subject to a polycondensation reaction at the reduced pressure of 400 to 0.1 mmHg and at the temperature of 240 to 300°C during an average retention time of 1 to 10 hours to produce the polyester resin for use of the present invention. Preferably, the pressure of the polycondensation reaction eventually reaches to less than 2.0 mmHg, and the esterification reaction or the trans-esterification reaction and the polycondensation reaction can be carried out under an inert gas atmosphere.

The polymerization conditions for preparing the polyester resin for use of the present invention will be described in more detail. For preparing the copolymerized polyester resin with the diacid components such as terephthalic acid and so on, the diol components such as isosorbide and so on, and lactic acid, the diacid components and the diol components are added for the mole ratio of the diol components with respect to the diacid components to be controlled to 1.05 to 3.0, and 1 to 50 weight% of the lactic acid or the compound derived therefrom with respect to the total resin polymerization reactants is added, and then the esterification reaction is carried out at the temperature of 200 to 300°C, preferably 240 to 260°C, more preferably 245 to 255°C and at the increased pressure of 0.1 to 3.0 kgf/cm², preferably 0.2 to 2.0 kgf/cm². When the mole ratio of the diol components to the diacid components is less than 1.05, there may remain unreacted diacid components after the polymerization reaction so that the transparency of the resin may be deteriorated, and when the mole ratio is more than 3.0, the polymerization reaction rate may decrease and the productivity of the resin may be unsatisfactory. The reaction time of the esterification reaction (average retention time) is generally 100 minutes to 10 hours, preferably 2 hours to 500 minutes, which can be varied according to the reaction temperature, the reaction pressure and the mole ratio of the diol components to the diacid components. The process for preparing polyester resin can be divided into the esterification reaction (Step 1) and the polycondensation reaction(Step 2). The esterification reaction does not require catalyst, but catalyst can be used to reduce the reaction time. The esterification reaction (Step 1) can be carried out in a batch-wise manner or a continuous manner. Each reactant can be introduced into a reactor separately, but it is preferable to introduce a slurry including the glycol components and the dicarboxylic acid component into the reactor.

After completion of the esterification reaction, the polycondensation reaction is carried out. Before the initiation of the polycondensation reaction, a polycondensation catalyst, a stabilizer, a colorant and other additives can be added to the product of the esterification reaction. Examples of the polycondensation catalyst include conventional titanium based catalyst, germanium based catalyst, antimony based catalyst, aluminum based catalyst, tin based catalyst, and mixtures thereof. Among these, the color of polyester resin produced using the germanium based catalyst is better than using the antimony based catalyst and the titanium based catalyst. As the stabilizer for the polycondensation reaction, conventional various phosphor based stabilizers, such as phosphoric acid, trimethyl phosphate, triethyl phosphate, and so on, can be used. Preferably, the stabilizer is introduced so that the amount of phosphor of the stabilizer is 10 to 100 ppm with respect to the total weight of the final produced polyester resin. When the amount of phosphor of the stabilizer is less 10 ppm, the polyester resin may not be sufficiently stabilized and the color of the polymer (polyester resin) may become yellow. When the amount of phosphor is more than 100 ppm, the polymerization degree of the polymer may be insufficient. The colorant is added to improve the color property of the polyester resin. Examples of the colorant include conventional colorant such as cobalt acetate, cobalt propionate. If necessary, organic colorant can be used as the colorant. The preferable amount of the colorant is 0 to 100 ppm with respect to the total weight of the polyester resin. Generally, the polycondensation reaction is carried out at the temperature of 240 to 300°C, preferably 250 to 290°C, more preferably 260 to 280 °C and at the reduced pressure of 400 to 0.1 mmHg. The reduced pressure of 400 to 0.1 mmHg is maintained in order to remove by-products of the polycondensation reaction or excess glycol. The polycondensation reaction can be carried out until desirable intrinsic viscosity of the polyester resin can be obtained, and, for example, can be carried out during an average retention time of 1 to 10 hours. In the polymerization of polyester for use according to the present invention, if necessary, small amounts (for example, 0.1 to 10 mol% of total reactants) of triacid and/or triol components can be used additionally besides the diacid components, diol components and lactic acid or compound derive therefrom. When the polyester resin for use of the present invention is dissolved with orthochlorophenol(OCP) to a concentration of 1.2 g/dl, the polyester resin shows the intrinsic viscosity of 0.5 dl/g or more, preferably 0.6 dl/g or more, more preferably 0.7 dl/g at the temperature of 35°C. Since the polyester resin for use of the present invention has superior heat-resistance and color, the polyester resin is suitable for producing polyester resin article selected from the group consisting of a film, a sheet, a drink bottle, a baby bottle, a fiber, an optical product, and so on.

Hereinafter, the preferable examples are provided for better understanding of the present invention. However, the present invention is not limited to the following examples. In the following Examples and Comparative Examples, unless specially mentioned, "part" or "%" means "weight part(part by weight)" or "weight%(% by weight)", TPA represents terephthalic acid, IPA represents isophthalic acid, ISB represents isosorbide(1,4:3,6-dianhydroglucitol), EG represents ethylene glycol, 1,3-PDO represents 1,3-propylene glycol, and Lactide represents L-lactide, and the method for performance evaluation of polymers is as follows.
(1) Intrinsic viscosity (IV): The IV of the polymer is measured by using Ubbelohde viscometer in a thermostat of 35°C after dissolving the polymer in ortho-chlorophenol under 150°C by the concentration of 0.12%.
(2) Heat-resistance (Glass-rubber transition temperature (Tg)): The Tg of the polyester resin is measured during 2nd scanning with heating rate of 10°C/min.
(3) Color: The color of the polyester resin is measured by using Colorgard System of Pacific Scientific company.
(4) Bio content(%): The amounts of each biomass resource components in the resin is measured by using 600Mhz nuclear magnetic resonance(NMR) spectrometer.

### [Comparative Examples 1 to 5] Preparation of polyester resin

According to the amount described in Table 1, reactants were added in the reactor of 7L volume, and a germanium based catalyst 200 ppm, a phosphate based stabilizer 70 ppm, and a cobalt based colorant 50 ppm were added, and then the reactor was heated to 240 to 300°C to carry out an esterification reaction. And a polycondensation reaction was started when 70 to 99% of water as byproduct was drained to out of the system, and terminated at the target viscosity. The catalyst, stabilizer and colorant were added by ppm unit on the basis of atoms of central elements of the catalyst, stabilizer and colorant respectively to the input of the total resources(reactants). Bio content(%), intrinsic viscosity, heat-resistance(Tg), color L, and color b of the prepared polyester resin were measured, and represented in Table 1.

### [Examples 1 to 6] Preparation of polyester resin

Except for using the amounts of reactants according to Table 1, polyester resin was prepared by the same manner described in Comparative Example. Bio content(%), intrinsic viscosity, heat-resistance(Tg), color L, and color b of the prepared polyester resin were measured, and represented in Table 1.

**[Table 1]**

| | Comparative Examples | | | | | Examples | | | | | |
|---|---|---|---|---|---|---|---|---|---|---|---|
| | 1 | 2 | 3 | 4 | 5 | 1 | 2 | 3 | 4* | 5 | 6 |
| TPA (weight part) | 78.0 | 72.4 | 68.0 | 71.0 | 64 | 68.0 | 60.0 | 58.0 | 55.0 | 57.0 | 61.0 |
| IPA (weight part) | | | | | 7.0 | | | | | | 7.0 |
| EG (weight part) | 29.1 | 21.6 | 15.2 | 15.9 | 15.9 | 24.6 | 21.1 | 17.3 | 12.3 | 12.8 | 24.6 |
| ISB (weight part) | 13.7 | 25.5 | 35.9 | 25.0 | 25.0 | 13.8 | 13.7 | 20.4 | 29.0 | 20.1 | 13.8 |
| 1,3-PDO (weight part) | | | | 6.5 | 6.5 | | | | | 5.2 | |
| Lactide (weight part) | | | | | | 12.0 | 21.0 | 20.1 | 19.1 | 19.8 | 12.0 |
| Bio content(%) | 14 | 25 | 36 | 32 | 32 | 24 | 33 | 38 | 46 | 43 | 33 |
| Tg(°C) | 85 | 110 | 135 | 85 | 83 | 82 | 80 | 104 | 127 | 81 | 82 |
| IV(dl/g) | 0.68 | 0.65 | 0.55 | 0.69 | 0.69 | 0.71 | 0.69 | 0.66 | 0.58 | 0.72 | 0.71 |
| Color-L | 62 | 53 | 40 | 60 | 59 | 66 | 65 | 65 | 59 | 64 | 65 |
| Color-b | 1 | 3 | 12 | 2 | 2 | -1 | 1 | 2 | 3 | 0 | -1 |

| | | | | | | | | | | | |
|---|---|---|---|---|---|---|---|---|---|---|---|
| *Reference Example | | | | | | | | | | | |

In Table 1, all of the amounts of the diacid components and diol components are inputs used in the preparation of polyester. As shown in Table 1, to compare a conventional polyester resin, the polyester resin for use of the present invention including the lactic acid or the compound derived therefrom has high Bio contents while it has same or higher heat-resistance. Specifically, polyester resins of Comparative Examples 1 to 3 are high heat-resisting polyester resins prepared by using isosorbide, whose Tg and Bio content are high while Color L and Color b are a little lower than those of the conventional polyester resin and IV is similar to the conventional polyester resin. However, input of isosorbide as a bio resource was increased for high bio contents so that Tg of the produced polyester is high but color tends to be deteriorated. If Tg is higher than need, it is difficult to synthesize high molecular weight polyester due to increased melting viscosity at high temperature, and color is deteriorated due to lowered reactivity. Polyester resins of Comparative Examples 4 and 5 are prepared by using 1,3-PDO as a bio resource and have similar IV and Tg to those of Comparative Example 1 and relatively high bio contents. However, 1,3-PDO is highly effective in lowering Tg so that the amount of isosorbide input is increased. If the amount of isosorbide is increased, color of the produced polyester is deteriorated, and 1,3-PDO also has a disadvantage in that it increases color intensity of the produced polymer. In Examples 1 to 6, lactide is more added to the same resources of Comparative Examples, so that polyester resins of Examples have relatively high bio contents and excellent color at similar Tg and IV.

## Claims

1. Use of an article for molding, the article comprising a polyester resin copolymerized with diacid components including terephthalic acid; diol components including 10 to 40 mol% of isosorbide and 50 to 80 mol% of ethylene glycol with respect to total diol components; and 1 to 50 weight% of lactic acid or a compound derived therefrom with respect to total reactants for resin polymerization,
wherein, the amount of biomass resource components including the isosorbide and the lactic acid or the compound derived therefrom is 5 to 70 weight%, and the polyester resin has the repeated structure of diacid moiety derived from the diacid components, diol moiety derived from the diol components and hydroxy monoacid moiety derived from the lactic acid or the compound derived therefrom, and
wherein an intrinsic viscosity of the polyester resin is 0.5 dl/g or more, and the intrinsic viscosity is measured at the temperature of 35 °C while the polyester resin is dissolved with orthochlorophenol to a concentration of 1.2g/dl.

2. The use according to claim 1, wherein the amount of compounds derived from petroleum resources including the diacid components and the diol components is 30 to 95 weight%, with respect to the total polyester resin polymerization reactants.

3. The use according to claim 1, wherein the lactic acid or the compound derived therefrom is selected from the group consisting of D-lactic acid, L-lactic acid, D-lactide and L-lactide.

4. The use according to claim 1, wherein the diacid components include 80 to 100 mol% of terephthalic acid and, as remaining components, dicarboxylic acid components selected from the group consisting of aromatic dicarboxylic acid components of 8 to 14 carbon numbers and aliphatic dicarboxylic acid components of 4 to 12 carbon numbers with respect to the total diacid components.

## Patentansprüche

1. Verwendung eines Gegenstands zur Formgebung, der Gegentand umfassend ein Polyesterharz copolymerisiert mit Disäurekomponenten einschließlich Terephthalsäure; Diolkomponenten einschließlich 10 bis 40 Mol-% Isosorbid und 50 bis 80 Mol-% Ethylenglycol mit Bezug auf die gesamten Diolkomponenten; und 1 bis 50 Gew.-% Milchsäure oder einer davon abgeleiteten Verbindung mit Bezug auf die Gesamtreaktanten für die Harzpolymerisation,
wobei die Menge an Komponenten aus Biomasseresourcen einschließlich des Isosorbids und der Milchsäure oder der davon abgeleiteten Verbindung 5 bis 70 Gew.-% beträgt, und das Polyesterharz die Wiederholungsstruktur aus Disäureeinheit, abgeleitet aus den Disäurekomponenten, Dioleinheit, abgeleitet aus den Diolkomponenten und Hydroxymonosäureeinheit, abgeleitet aus der Milchsäure oder der davon abgeleiteten Verbindung aufweist, und
wobei eine Grenzviskosität des Polyesterharzes 0,5 dl/g oder mehr beträgt, und die Grenzviskosität gemessen wird bei einer Temperatur von 35 °C, wobei das Polyesterharz mit Orthochlorphenol bis zu einer Konzentration von 1,2 g/dl gelöst wird.

2. Verwendung nach Anspruch 1, wobei die Menge an von Erdölresourcen abgeleiteten Verbindungen einschließlich der Disäurekomponenten und der Diolkomponenten 30 bis 95 Gew.-% beträgt, mit Bezug auf die gesamten Polyesterharz-Polymerisationsreaktanten.

3. Verwendung nach Anspruch 1, wobei die Milchsäure oder die davon abgeleitete Verbindung aus der Gruppe gewählt ist, bestehend aus D-Milchsäure, L-Milchsäure, D-Lactid und L-Lactid.

4. Verwendung nach Anspruch 1, wobei die Disäurekomponenten 80 bis 100 Mol-% Terephthalsäure beinhalten und, als verbleibende Komponenten, Dicarbonsäurekomponenten, gewählt aus der Gruppe, bestehend aus aromatischen Dicarbonsäurekomponenten mit 8 bis 14 Kohlenstoffzahlen und aliphatischen Dicarbonsäurekomponenten mit 4 bis 12 Kohlenstoffzahlen mit Bezug auf die gesamten Disäurekomponenten.

## Revendications

1. Utilisation d'un article pour moulage, l'article comprenant une résine de polyester copolymérisée avec des composants diacides comportant de l'acide téréphtalique ; des composants diols comportant entre 10 et 40 % en moles d'isosorbide et entre 50 et 80 % en moles d'éthylène glycol par rapport au total des composants diols ; et entre 1 et 50 % en poids d'acide lactique ou d'un composé dérivé de celui-ci par rapport au total des réactifs pour la polymérisation de résine,
la quantité de composants de ressource de biomasse comportant l'isosorbide et l'acide lactique ou le composé dérivé de celui-ci étant comprise entre 5 et 70 % en poids, et la résine de polyester ayant la structure répétée de la fraction diacide dérivée des composants diacides, la fraction diol dérivée des composants diols et la fraction hydroxymonoacide dérivée de l'acide lactique ou du composé dérivé de celui-ci, et
un viscosité intrinsèque de la résine de polyester étant de 0,5 dl/g ou plus, et la viscosité intrinsèque étant mesurée à la température de 35 °C pendant que la résine de polyester est dissoute avec de l'orthochlorophénol à une concentration de 1,2 g/dl.

2. Utilisation selon la revendication 1, dans laquelle la quantité de composés dérivés de ressources pétrolières comportant les composants diacides et les composants diols est comprise entre 30 et 95 % en poids par rapport au total des réactifs de polymérisation de résine de polyester.

3. Utilisation selon la revendication 1, dans laquelle l'acide lactique ou le composé dérivé de celui-ci est sélectionné dans le groupe comprenant l'acide lactique D, l'acide lactique L, le lactide D et le lactide L.

4. Utilisation selon la revendication 1, dans laquelle les composants diacides comportent entre 80 et 100% en moles d'acide téréphtalique et, en tant que composants restants, des composants d'acide dicarboxylique sélectionnés dans le groupe comprenant des composants d'acide dicarboxylique aromatique dont le nombre de carbone est compris entre 8 et 14 et des composants d'acide dicarboxylique aliphatique dont le nombre de carbone est compris entre 4 et 12 par rapport au total des composants diacides.
